# EUROPEAN PATENT APPLICATION

(11) **EP 3 193 337 A1**
(43) Date of publication of application: **19.07.2017**
(21) Application number: 16205452.2
(22) Date of filing: 20.12.2016
(51) Int. Cl.: G21K 4/00

(54) **PASSIVATION OF METAL HALIDE SCINTILLATORS**

(30) Priority: 13.01.2016 US 201614994181
(71) Applicant: Siemens Medical Solutions USA, Inc., Malvern, PA 19355-1406 (US)
(72) Inventor: ANDREACO, Mark S., Knoxville, Tennessee 37934 (US); CAREY, Alexander Andrew, Lenoir City, Tennessee 37772 (US); COHEN, Peter Carl, Knoxville, Tennessee 37922 (US)
(74) Representative: Patentanwälte Bals & Vogel

(57) **Abstract**

A halide material, such as scintillator crystals of LaBr₃:Ce and SrI₂:Eu, with a passivation surface layer is disclosed. The surface layer comprises one or more halides of lower water solubility than the scintillator crystal that the surface layer covers. A method for making such a material is also disclosed. In certain aspects of the disclosure, a passivation layer is formed on a surface of a halide material such as a scintillator crystal of LaBr₃:Ce of SrI₂:Eu by fluorinating the surface with a fluorinating agent, such as F₂ for LaBr₃:Ce and HF for SrI₂:Eu.

## Description

### TECHNICAL FIELD

This disclosure relates to scintillator materials and particularly to metal halide scintillator materials. Certain arrangements also relate to specific compositions of such scintillator material and method of making the same.

### BACKGROUND

Scintillator materials, which emit light pulses in response to impinging radiation, find a wide range of applications, including medical imaging, particle physics and geological exploration. While a variety of scintillator materials have been made, there is a continuous need for superior scintillator materials.

### SUMMARY

The present disclosure relates to halide scintillator materials that include a bulk metal halide scintillator material with one or more passivation surface layers that have a lower hygroscopicity, or solubility in water, than the bulk material, thereby protecting the bulk scintillator material from moisture.

In one example, a starting metal halide scintillator material, such as a LaBr₃:Ce crystal, is treated with a material, such as F₂ or BF₃ gas, that reacts with the starting material to form a surface layer of a compound, such as LaF₃, that is less hygroscopic than the starting material.

In another example, a material comprises a metal halide crystal, which can be a scintillator crystal, such as a LaBr₃:Ce crystal, with a coating of a less hygroscopic material, such as LaF₃.

### DESCRIPTION

Disclosed herein are metal halide scintillators that have passivated surfaces. The passivated surface also comprises a metal halide where the halogen atom of the surface has a higher atomic number than the halogen atom of the metal halide scintillator. The scintillators can comprise single crystals, a polycrystalline material a combination of single and polycrystalline materials.

Put another way, a metal halide scintillator comprises a first metal halide upon which is disposed a second metal halide, where the second metal halide comprises a halogen atom that has a lower atomic number than the halogen atom of the first metal halide. Put yet another way, a metal halide scintillator comprises a first metal halide core upon which is disposed a layer of a second metal halide, where the second metal halide comprises a halogen atom that has a lower atomic number than the halogen atom of the first metal halide. The first metal halide is a scintillator that comprises a single crystal, a polycrystalline material or a combination of single and polycrystalline materials.

The second metal halide may or may not display scintillation but passivates the first metal halide. In an embodiment, the second metal halide has a lower solubility in water than the first metal halide. The second metal halide is less hygroscopic than the first metal halide and protects the first metal halide from being solubilized by water present in the atmosphere. It permits the resulting scintillator to have a longer shelf life than it would have otherwise had. It also permits a more accurate calibration of the scintillator for use in devices such as positron emission tomography (PET), computed tomography (CT), or single photon emission computed tomography (SPECT) machines and in other imaging devices.

Metal halides constitute a large class of scintillators. For example, NaI:TI is one of the first single crystal scintillators discovered and is still widely used. Another popular example is SrI₂:Eu. In general, the solubility of the metal halide increases in transitioning down the series (F> CI> Br> I). Any element above in the series can displace one below it. In short, it is desirable for the halogen atom of the first halide metal to be replaced by a halogen atom having a lower atomic number in the second metal halide. For example, chlorine (or HCI) can displace an iodide anion and fluorine can displace chlorine. Thus, a metal halide fluorinated surface should in general be less hygroscopic, or water soluble, than the other possible halides.

Cerium doped lanthanum bromide, LaBr₃:Ce, for example, is an excellent scintillator, with a high light output, narrow energy resolution, short decay time and excellent timing resolution. However, LaBr₃:Ce has a serious drawback: its hygroscopic behavior, *i.e.* high solubility in water. According to one aspect of the present disclosure, a layer of material like LaF₃ can be formed on the LaBr₃:Ce. LaF₃ makes a good coating because it has a solubility of only about 2 ppm.

It is desirable for both the first metal halide and the second metal halide to be scintillators. However, it may be noted that the second metal halide (which passivates the surface of the first metal halide) may not be a scintillator. If the second metal halide is not a scintillator, it is desirable that it passivates the surface of the first metal halide while not absorbing to much of the light that is emitted by the first metal halide. If the second metal halide is not a scintillator and serves only the function of a passivator, it is desirable for it to transmit 60% or more, preferably 70% of more, preferably 80% or more, preferably 90% or more and more preferably 98% or more of the light from the first metal halide that is incident upon it.

### First Metal Halide

In an embodiment, the first metal halide has a composition that is described by formula (1):

M¹X¹ₐ:Y_{b} (1)

where M¹ is a metal that is lithium, sodium, potassium, rubidium, cesium, thallium, copper, silver, lead, bismuth, indium, tin, antimony, tantalum, tungsten, strontium, barium, boron, magnesium, calcium, cerium, yttrium, scandium, gadolinium, lanthanum, lutetium, praseodymium, terbium, ytterbium, samarium, europium, holmium, dysprosium, erbium, thulium, or neodymium, X¹ is a halogen, where the halogen is chlorine, bromine, iodine, astanine, or a combination thereof and were Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium. In the formula (1), a has a value of 1 to 4, 1 to 3 and 2 to 3, while b has a value of 0 to about 1, preferably about 0.001 to about 0.5 and more preferably about 0.003 to about 0.3. In the Formula (1), M¹ and Y are different from each other.

In an exemplary embodiment, M¹ is preferably sodium, potassium, calcium, cerium, cesium, barium, lanthanum, or lutetium; while X¹ is preferably chlorine, bromine, iodine, or a combination thereof and Y is preferably cerium, europium, potassium or thallium. The first metal halide excludes cesium iodide and cesium boride.

Exemplary scintillators of the first metal halide having the composition detailed by Formula (1) are NaI:Tl, KI:Tl, CsI:Tl, LaCl₃:Ce (e.g., LaCl₃:Ce³⁺), LaBr₃:Ce (e.g., LaBr₃:Ce³⁺), LuCl₃:Ce (e.g., LuCl₃:Ce³⁺), LuBr₃:Ce (e.g., LuBr₃:Ce³⁺), or SrI₂:Eu (e.g., SrI₂:Eu²⁺).

In another embodiment, the first metal halide has a composition that is described by Formula (2), Formula (3) or Formula (4):

M¹ₗM²ₘX¹ₐ:Y_{b} (2)

M¹₁M²ₘM³ₙX¹ₐ:Y_{b} (3)

and

M¹ₗM²ₘM³ₙM⁴ₒX¹ₐ:Yb (4),

where in the Formulas (2), (3) and (4) wherever applicable, M¹ is lithium, sodium, potassium, calcium, rubidium, gadolinium, cesium, thallium, copper, silver, lead, bismuth, indium, tin, antimony, tantalum, tungsten, strontium, barium, boron, magnesium, calcium, cerium, yttrium, scandium, lanthanum, lutetium, praseodymium, terbium, ytterbium, samarium, europium, holmium, dysprosium, erbium, thulium, or neodymium, M² is selected from the group consisting of boron, aluminum, gallium, indium, sodium, potassium, calcium, gadolinium, rubidium, cesium, thallium, cerium, yttrium, scandium, lanthanum, lutetium, praseodymium, terbium, ytterbium, samarium, europium, holmium, dysprosium, erbium, thulium, or neodymium, M³ and M⁴ are different from one another and are one of strontium, calcium, barium, gadolinum, yttrium, scandium, lanthanum, lutetium, praseodymium, terbium, ytterbium, samarium, europium, holmium, dysprosium, erbium, thulium, or neodymium. The term "wherever applicable" is used to denote that some of the terms (e.g., M³ and M⁴) may not be applicable to certain formulas. For example, M³ does not apply to Formula (2) and M⁴ does not apply to Formula (3).

In the Formulas (2), (3) and (4), X¹ is a halogen selected from chlorine, bromine, iodine, astinine, or a combination thereof, Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium, where l is 0 to 3, 1 to 3, or 2 to 3, m is 0 to 3, 1 to 3, or 2 to 3, n is 0 to 3, 1 to 3, or 2 to 3, and o is 0 to 3, 1 to 3, or 2 to 3, where the sum of 1+ m in Formula (2) is not equal to 0, where the sum of l + m, m + n, l + n and l + m + n is not equal to 0 in Formula (3) and where the sum of l + m, m + n, l + n, l +o, m + o, n + o and l + m +n +o is not equal to 0 in the Formula (4); where in the Formulas (2), (3) and (4), "a" is 1 to 8, 2 to 7, 3 to 6 and 4 to 5, and "b" has a value of 0 to about 1, preferably about 0.001 to about 0.5 and more preferably about 0.003 to about 0.3.

In the Formula (2), M¹, M² and Y are different from each other and only one of M¹ or M² is a rare earth metal. In an embodiment in the Formula (2), M² and Y are different from each other and both may or may not be rare earth metals. In the Formula (3), M¹, M², M³ and Y are different from each other and at least one of M¹, M² and M³ is a rare earth metal. In an embodiment in the Formula (3), M², M³ and Y are different from each other and both may or may not be rare earth metals.

In the Formula (4), M¹, M², M³ and M⁴ and Y are each different from each other and at least one of M¹, M², M³ and M⁴ and Y are rare earth metals. In an embodiment, at least two of M¹, M², M³ and M⁴ and Y are rare earth metals and are different from each other.

Examples of compounds having the Formula (2) are K₂LaCl₅:Ce³⁺, K₂LaBr₅:Ce³⁺, K₂LaI₅:Ce³⁺, Na₂LaBr₅:Ce³⁺, RbGd₂Br₇:Ce³⁺, CsGd₂Br₇:Ce³⁺, and the like.

Examples of compounds having the Formula (3) are Cs₂LiYCl₆:Ce³⁺, Cs₂LiYBr₆:Ce³⁺, Cs₂NaYCl₆:Ce³⁺, Cs₂NaLaCl₆:Ce³⁺, Cs₂NaLuCl₆:Ce³⁺, Cs₂LiLaCl₆:Ce³⁺, Rb₂NaYCl₆:Ce³⁺, Rb₂NaLaCl₆:Ce³⁺, Cs₂LiYI₆:Ce³⁺, and the like.

### The Second Metal Halide

The second metal halide has a composition that is described by formula (5):

M¹X²ₐ:Y_{b} (5)

where M¹, Y, a and b are detailed above in the Formula (1), where X² is a halogen, where the halogen is fluorine, chlorine, bromine, ,iodine, or a combination thereof and were X² in the Formula (5) has a lower atomic weight than X¹ in the Formulas (1), (2), (3) or (4). When X² and X¹ both involve a combination of halogen atoms, then the combined atomic weight of X² is less than X¹. When X² involves a combination of halogen atoms, but X¹ contains only a single halogen atom, then X² contains at least one halogen atom that has a lower atomic weight than the single halogen atom contained in X¹. In other words, X² in the Formula (5) is a halogen that is fluorine, chlorine, bromine, iodine, or a combination thereof and that has at least one halogen atom having a lower atomic weight than any of the halogen atoms in X¹in the Formula (1).

Exemplary scintillators of the second metal halide having the composition detailed by Formula (5) are NaF:Tl, CsF:Tl, BaF₂, CaF₂(Eu), LaF₃:Ce (e.g., LaF₃:Ce³⁺), LaBr₃:Ce (e.g., LaBr₃:Ce³⁺), LuCl₃:Ce (e.g., LuCl₃:Ce³⁺), LuBr₃:Ce (e.g., LuBr₃:Ce³⁺), or SrF₂:Eu (e.g., SrF₂:Eu²⁺), LaFBr₂, LaF₂Br,or a combination thereof.

In another embodiment, the second metal halide has a composition that is described by Formula (6) through Formula (8):

M¹ₗM²ₘX²ₐ:Y_{b} (6)

M¹ₗM²ₘM³ₙX²ₐ:Y_{b} (7)

and

M¹ₗM²ₘM³ₙM⁴ₒX²ₐ:Y_{b} (8),

where M¹, M², M³, M⁴, X, Y, l, m, n, o, a and b from the Formulas (6), (7) and (8) are defined above in Formulas (2) (3) and (4) and where X² from the Formulas (6), (7) and (8) has a lower atomic weight than X¹ in Formulas (1), (2), (3) and (4).

It is to be noted that the invention represented by the Formulas (1) through (8) excludes first metal halides that include cesium iodide (Csl) or cesium bromide (CsBr) scintillator crystals.

In an embodiment, the second metal halide may fully or partially cover the entire surface of the first metal halide. In another embodiment, the protective layer may comprises a third metal halide layer that is disposed on the second metal halide layer, where the third metal halide layer has a halogen atom that is lower in atomic weight than the halogen atom of the second metal halide layer. In short, the scintillator may comprise a plurality of protective layers where each succeeding outer layer (as one moves away from the core towards the outermost surface) contains a metal halide that has a halogen atom with a lower atomic weight than the halogen atom of the metal halide of the preceding layer.

In another embodiment, the second metal halide layer may be produced by treating the surface of the first metal halide with a halogen having a lower atomic number than the atomic number of the halogen contained in the first metal halide. For example, a first metal halide of lanthanum boride may be treated with chlorine (or a chlorinating agent) to convert some of the lanthanum boride at the surface to form a passivating layer of lanthanum chloride. The lanthanum chloride at the surface of the scintillator may then be treated with fluorine (or a fluorinating agent) to form a layer of lanthanum fluoride on the layer of lanthanum chloride.

Alternatively, as discussed below the lanthanum boride may be treated with only fluorine to form a layer of lanthanum fluoride which passivates the surface of the lanthanum boride

In another aspect of the present disclosure, fluorine gas (F₂) or multiple other strong fluorinating agents can be used to fluorinate the surface of metal halide crystals such as LaBr₃. Fluorine in the fluorine gas simply displaces bromine on the surface according to the reaction:

2LaBr₃ + 3F₂ → 2LaF₃ + 3Br₂.

The gas phase reaction of F₂ simply displaces the bromide ions at or near the surface and is thermodynamically preferred. Light and heat can control the amount of fluorination. Fluorination for passivating materials has been used in industry, particularly in semiconductor industry. The fluorination process is thus well known to those skilled in the art.

In another aspect of the preset disclosure, successive coating layers of lanthanum fluoride/bromide occur:

LaBr₃ -7 LaFBr₂ -7 LaF₂Br -7 LaF₃.

In other words, the first metal halide is LaBr3, the second metal halide comprises

Thus, the surface of the crystal is passivated and can simplify the manufacture of such crystals.

In another aspect of the disclosure, a fluorinating agent is boron trifluoride BF₃. This volatile gas is a classic Lewis acid, and as such is a source of labile fluorine. The reaction can be expressed as:

LaBr₃ + BF₃ → LaF₃ + BBr₃.

Boron tribromide (BBr₃) is volatile and can be removed in a vacuum. BF₃ would also make a good catalyst for fluorination using F₂.

In a further aspect of the disclosure, anhydrous HF can also be used to provide fluorine, which displaces a lower halogen. For example, HF can be used with SrI₂:Eu.

Other fluorinating agents include, but not limited to: PF₅, SbF₅, SF₄, NF₃, SIF₄, WF₆, ClF₃, BrF₅ (and other interhalogen gases) and xenon fluorides.

The fluorination procedure can also be used on other metal halides, such as NaI.

Thus, metal halide scintillators and scintillation detectors with improved stability against moisture can be made by forming one or more surface layers of halides of lower solubility than the interior region of the metal halide.. Because many embodiments of the invention can be made without departing from the spirit and scope of the invention, the invention resides in the claims hereinafter appended.

## Claims

1. A material, comprising:
a first metal halide that is operative to function as a scintillator; where the first metal halide excludes cesium iodide and cesium bromide; and
a surface layer comprising a second metal halide that is disposed on a surface of the first metal halide; where the second metal halide has a lower water solubility than the first metal halide.

2. The material according to Claim 1, further comprising another layer disposed on a surface of the second metal halide; where the another layer comprises a third metal halide that has a lower water solubility than the second metal halide.

3. The material according to Claims 1 or 2, wherein the first metal halide has a composition that is described by formula (1):
M¹X¹ₐ:Y_{b} (1)
where M¹ is a metal that is lithium, sodium, potassium, rubidium, cesium, thallium, copper, silver, lead, bismuth, indium, tin, antimony, tantalum, tungsten, strontium, barium, boron, magnesium, calcium, cerium, yttrium, scandium, gadolinium, lanthanum, lutetium, praseodymium, terbium, ytterbium, samarium, europium, holmium, dysprosium, erbium, thulium, or neodymium, X¹ is a halogen, where the halogen is chlorine, bromine, iodine, astanine, or a combination thereof and were Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium, where M¹ and Y are different elements, where a has a value of 1 to 4 and where b has a value of 0 to about 1 and where the second metal halide has a composition that is described by formula (5)
M¹X²ₐ:Y_{b} (5)
where M¹, Y, a and b are detailed above in the Formula (1), where X² in the Formula (5) is a halogen that is fluorine, chlorine, bromine, iodine, or a combination thereof and that has at least one halogen atom having a lower atomic weight than X¹in the Formula (1).

4. The material according to Claim 3, where "b" has a value of about 0.001 to about 0.5 and where "a" has a value of 1, 2 or 3.

5. The material according to Claims 3 or 4, where when X² and X¹ both involve a combination of halogen atoms, the combined atomic weight of X² is less than X¹ or alternatively, when X² involves a combination of halogen atoms, but X¹ contains only a single halogen atom, then X² contains at least one halogen atom that has a lower atomic weight than the single halogen atom contained in X¹.

6. The material according to any of the Claims 1 to 5, where the first metal halide has a composition that is described by Formula (2), Formula (3) or Formula (4):
M¹ₗM²ₘX¹ₐ:Y_{b} (2)
M¹ₗM²ₘM³ₙX¹ₐ:Y_{b} (3)
and
M¹ₗM²ₘM³ₙM⁴ₒX¹ₐ:Y_{b} (4),
where in the Formulas (2), (3) and (4), where applicable, M¹ is lithium, sodium, potassium, calcium, rubidium, gadolinium, cesium, thallium, copper, silver, lead, bismuth, indium, tin, antimony, tantalum, tungsten, strontium, barium, boron, magnesium, calcium, cerium, yttrium, scandium, lanthanum, lutetium, praseodymium, terbium, ytterbium, samarium, europium, holmium, dysprosium, erbium, thulium, or neodymium, M² is selected from the group consisting of boron, aluminum, gallium, indium, sodium, potassium, calcium, gadolinium, rubidium, cesium, thallium, cerium, yttrium, scandium, lanthanum, lutetium, praseodymium, terbium, ytterbium, samarium, europium, holmium, dysprosium, erbium, thulium, or neodymium, M³ and M⁴ are different from one another and are one of strontium, calcium, barium, gadolinum, yttrium, scandium, lanthanum, lutetium, praseodymium, terbium, ytterbium, samarium, europium, holmium, dysprosium, erbium, thulium, or neodymium, X¹ is a halogen selected from chlorine, bromine, iodine, astinine, or a combination thereof; Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium, where l is 0 to 3, m is 0 to 3, n is 0 to 3, and o is 0 to 3, and where the sum of 1+ m in Formula (2) is not equal to 0, where the sum of l + m, m + n, l + n and l + m + n is not equal to 0 in Formula (3) and where the sum of l + m, m + n, l + n, +o, m + o, n + o and l + m +n +o is not equal to 0 in the Formula (4); where in the Formulas (2), (3) and (4), "a" is 1 to 8, and "b" is 0 to about 1; where in the Formula (2), M¹, M² and Y are different from each other and only one of M¹ or M² is a rare earth metal; where in the Formula (3), M¹, M², M³ and Y are different from each other and at least one of M¹, M² and M³ is a rare earth metal and where embodiment in the Formula (3), M², M³ and Y are different from each other and both may or may not be rare earth metals and where in the Formula (4), M¹, M², M³ and M⁴ and Y are each different from each other and at least one of M¹, M², M³ and M⁴ and Y are rare earth metals.

7. The material according to Claim 6, where the second metal halide has a composition that is described by formula (5)
M¹X²ₐ:Y_{b} b (5)
where M¹ is a metal that is lithium, sodium, potassium, rubidium, cesium, thallium, copper, silver, lead, bismuth, indium, tin, antimony, tantalum, tungsten, strontium, barium, boron, magnesium, calcium, cerium, yttrium, scandium, gadolinium, lanthanum, lutetium, praseodymium, terbium, ytterbium, samarium, europium, holmium, dysprosium, erbium, thulium, or neodymium, X¹ is a halogen, where the halogen is chlorine, bromine, iodine, astanine, or a combination thereof and were Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium, where M¹ and Y are different elements, where a has a value of 1 to 4 and where b has a value 0 to about 1 and where X² in the Formula (5) is a halogen that is fluorine, chlorine, bromine, iodine, or a combination thereof and that has at least one halogen atom having a lower atomic weight than X¹in the Formulas (2), (3) and (4).

8. The material according to Claim 6, where the second metal halide has a composition that is described by formulas (6) through (8)
M¹ₗM²ₘX²ₐ:Y_{b} (6)
M¹ₗM²ₘM³ₙX²ₐ:Y_{b} (7)
and
M¹ₗM²ₘM³ₙM⁴ₒX²ₐ:Y_{b} (8),
where M¹, M², M³, M⁴, X, Y, l, m, n, o, a and b from the Formulas (6), (7) and (8) are defined above in Formulas (2) (3) and (4) and where X² from the Formulas (6), (7) and (8) has a lower atomic weight than X¹ in Formulas (2), (3) and (4).

9. The material according to Claim 7, where when X² and X¹ both involve a combination of halogen atoms, the combined atomic weight of X² is less than X¹ or alternatively, when X² involves a combination of halogen atoms, but X¹ contains only a single halogen atom, then X² contains at least one halogen atom that has a lower atomic weight than the single halogen atom contained in X¹.

10. The material according to any of the Claims 7 to 9, where "b" has a value of about 0.001 to about 0.5 and where "a" has a value of 2 to 7.

11. The material according to any of the Claims 1 to 10, where the first metal halide comprises NaI:Tl, KI:Tl, CsI:Tl, LaCl₃:Ce, LaBr₃:Ce, LuCl₃:Ce, LuBr₃:Ce, SrI₂:Eu, or a combination thereof.

12. The material according to any of the Claims 1 to 11, where the second metal halide comprises NaF:Tl, CsF:Tl, BaF₂, CaF₂(Eu), LaF₃:Ce, LaBr₃:Ce, LuCl₃:Ce, LuBr₃:Ce, SrF₂:Eu, LaFBr₂, LaF₂Br, or a combination thereof.

13. An article comprising the material according to any of the Claims 1 to 12.

14. The article according to Claim 13, where the article is a positron emission tomography device, a computed tomography device, or single photon emission computed tomography device.

15. A method comprising:
disposing on a surface of a first metal halide a layer comprising a second metal halide;
where the first metal halide is a scintillator and excludes cesium iodide and cesium bromide; and where the second metal halide has a lower water solubility than the first metal halide.

16. The method according to Claim 15, further comprising disposing a third metal halide on a surface of the second metal halide, where the third metal halide has a lower water solubility than the second metal halide.

17. The method according to claim 15 or 16, wherein the first metal halide has a composition that is described by formula (1):
M¹X¹ₐ:Y_{b} (1)
where M¹ is a metal that is lithium, sodium, potassium, rubidium, cesium, thallium, copper, silver, lead, bismuth, indium, tin, antimony, tantalum, tungsten, strontium, barium, boron, magnesium, calcium, cerium, yttrium, scandium, gadolinium, lanthanum, lutetium, praseodymium, terbium, ytterbium, samarium, europium, holmium, dysprosium, erbium, thulium, or neodymium, X¹ is a halogen, where the halogen is chlorine, bromine, iodine, astanine, or a combination thereof and were Y is a codopant and comprises and comprises one or more of thallium, copper, silver, lead, bismuth, indium, tin, antimony, tantalum, tungsten, strontium, barium, boron, magnesium, gadolinium, calcium, potassium, cerium, yttrium, scandium, lanthanum, lutetium, praseodymium, terbium, ytterbium, samarium, europium, holmium, dysprosium, erbium, thulium or neodymium, where M¹ and Y are different elements, where a has a value of 1 to 4 and where b has a value of 0 to about 1 and where the second metal halide has a composition that is described by formula (5)
M¹X²ₐ:Y_{b} (5)
where M¹, Y, a and b are detailed above in the Formula (1), where X² in the Formula (5) is a halogen that is fluorine, chlorine, bromine, iodine, or a combination thereof and that has at least one halogen atom having a lower atomic weight than X¹in the Formula (1).

18. The method according to Claim 17, where "b" has a value of about 0.001 to about 0.5 and where "a" has a value of 1, 2 or 3.

19. The method according to Claims 17 or 18, where when X² and X¹ both involve a combination of halogen atoms, the combined atomic weight of X² is less than X¹ or alternatively, when X² involves a combination of halogen atoms, but X¹ contains only a single halogen atom, then X² contains at least one halogen atom that has a lower atomic weight than the single halogen atom contained in X¹.

20. The method according to any Claims 15 to 19, where disposing on the second metal halide is produced by chlorinating or fluorinating the surface of a first metal halide.
